# EUROPÄISCHE PATENTANMELDUNG

(11) **EP 4 241 958 A1**
(43) Veröffentlichungstag der Anmeldung: **13.09.2023**
(21) Anmeldenummer: 23159519.0
(22) Anmeldetag: 01.03.2023
(51) Int. Cl.: B29C 45/27

(54) **EINSATZ FÜR EINE SPRITZGIESSDÜSE UND SPRITZGIESSDÜSE MIT EINEM SOLCHEN EINSATZ**

(30) Priorität: 07.03.2022 DE 102022105317
(71) Anmelder: Günther Heisskanaltechnik GmbH, 35066 Frankenberg (DE)
(72) Erfinder: Sommer, Siegrid, 35099 Burgwald (DE); Schnell, Torsten, 35104 Lichtenfels (DE)
(74) Vertreter: Patentanwälte Olbricht Buchhold Keulertz

(57) **Zusammenfassung**

Die Erfindung betrifft einen Einsatz (20) für eine Spritzgießdüse (10) einer Spritzgießvorrichtung, wobei die Spritzgießdüse (10) einen Düsenkörper (12) aufweist, der sich in einer Längsrichtung (L) erstreckt und in dem zwischen einem ersten Ende (13 und einem zweiten Ende (14) entlang der Längsrichtung (L) wenigstens ein Schmelzekanal (16) für eine zu verarbeitende fließfähige Masse ausgebildet ist, wobei der wenigstens eine Schmelzekanal (16) in einem im Spritzgießwerkzeug ausgebildeten Formnest (18) der Spritzgießvorrichtung mündet. der Einsatz (20) hat einen Grundkörper (30), der sich entlang der Längsrichtung (L) erstreckt. Der Grundkörper (30) des Einsatzes (20) hat einen Abschnitt (40), der in montierter Stellung des Einsatzes (20) in der Spritzgießvorrichtung im Bereich des zweiten Endes (14) des Düsenkörpers (12) angeordnet ist, und einen zweiten Abschnitt (50), der sich in montierter Stellung des Einsatzes (20) in der Spritzgießvorrichtung an einer Werkzeugplatte (17) der Spritzgießvorrichtung abstützt. Um neben einem guten Verschleißschutz für die Spritzgießdüse eine optimierte Temperierung der in der Spritzgießdüse geführten fließfähigen Masse zu ermöglichen, sieht die Erfindung vor, dass der zweite Abschnitt (50) des Grundkörpers (30) für den Kontakt mit der Werkzeugplatte (17) der Spritzgießvorrichtung eine Anlagefläche (52) aufweist, wobei in der Anlagefläche (52) wenigstens eine Ausnehmung oder Vertiefung (54) ausgebildet ist.

## Beschreibung

Die Erfindung betrifft einen Einsatz für eine Spritzgießdüse gemäß dem Oberbegriff von Anspruch 1 und eine Spritzgießdüse mit einem Einsatz gemäß Anspruch 11.

Spritzgießdüsen, insbesondere Heißkanaldüsen oder Kaltkanaldüsen, werden in Spritzgießwerkzeugen eingesetzt, um eine fließfähige Masse, beispielsweise ein Kunststoffmaterial, unter Druck einem trennbaren Formeinsatz zuzuführen. Sie haben meist ein temperierbares Materialrohr mit einem Strömungskanal, der über eine Einlassöffnung mit einem Verteilerkanal in einer Verteilerplatte oder (bei Einzeldüsen) direkt mit einer Maschinendüse strömungsverbunden ist und über eine Auslassöffnung in der Angussöffnung des Formeinsatzes (Formnest) mündet.

Um zu erreichen, dass die fließfähige Masse bis an die Angussöffnung des Formeinsatzes heran möglichst gleichmäßig temperiert bleibt, wird beispielsweise endseitig in dem Materialrohr eine Wärmeleithülse aus hochwärmeleitfähigem Material eingesetzt, die den Strömungskanal des Materialrohrs fortsetzt und endseitig eine Auslassöffnung für die Spritzgießdüse bildet.

Bei einer offenen Düse ist die Wärmeleithülse gewöhnlich als Düsenmundstück ausgebildet und mit einer kegelförmigen Düsenspitze versehen. Bei einer Nadelverschlussdüse bildet die Wärmeleithülse meist eine Nadelführung, die als Zentrierkörper für die Verschlussnadel dient und im Bereich der Auslassöffnung mit einem Dichtsitz für die Verschlussnadel versehen ist.

Bei der Verarbeitung abrasiver Materialien entsteht an der Wärmeleithülse, oder wenn eine solche nicht vorgesehen ist, am Materialrohr, ein erhöhter Verschleiß, so dass die Wärmeleithülse, das Materialrohr oder gar die gesamte Düse relativ häufig ausgetauscht werden müssen. Bei Nadelverschlussdüsen entstehen Abnutzungen und Beschädigungen an den Zentrierflächen der Nadelführung sowie am Dichtsitz der Verschlussnadel, so dass letztere nicht mehr exakt und dicht schließen kann.

Zur Verbesserung der Lebensdauer einer Nadelführung schlägt DE 32 45 571 C2 vor, diese aus einem verschleißfesten Werkstoff zu fertigen. Problematisch hierbei ist jedoch, dass der verschleißfeste Werkstoff meinst nur schlecht wärmeleitende Eigenschaften hat. Ferner muss im Verschleißfall die gesamte Nadelführung ausgetauscht werden.

DE 203 02 845 U1 ergänzt eine Wärmeleithülse mit einem separaten verschleißfesten Einsatz, der längsverschiebbar angeordnet ist. Der Einsatz hat einen im Wesentlichen zylindrischen Grundkörper mit einem Flanschabschnitt, einem Halsabschnitt und einem Endabschnitt. Der Halsabschnitt wird in die Wärmeleithülse eingesetzt, während der Endabschnitt mit dem Formeinsatz des Werkzeugs in Eingriff gelangt. Mit dem Flanschabschnitt stützt sich der Einsatz im Werkzeug ab.

In EP 1 654 105 B1 ist für den verschließfesten Einsatz eine zusätzliche Stützbuchse aus einem schlecht wärmeleitenden Material vorgesehen, mit der sich der Einsatz am oder im Formeinsatz abstützt. Dadurch wird eine thermische Trennung zwischen dem verschleißfesten Einsatz und dem Formeinsatz erreicht. Ergänzend ist zwischen dem Materialrohr und der Stützbuchse ein weiterer Stützring angeordnet.

Aufgabe der Erfindung ist es, diese und weitere Nachteile des Standes der Technik zu überwinden und einen Einsatz für eine Spritzgießdüse zu schaffen, der mit einfachen Mitteln kostengünstig aufgebaut ist und einen optimalen Verschleißschutz bietet. Der Einsatz soll zudem die Temperierung der fließfähigen Masse nicht beeinträchtigen und bei kompakter Ausbildung eine optimale thermische Trennung zwischen der Spritzgießdüse und dem Formeinsatz gewährleisten. Angestrebt wird ferner eine einfache und leichte Handhabung. Hauptmerkmale der Erfindung sind im kennzeichnenden Teil von Anspruch 1 und Anspruch 11 angegeben. Ausgestaltungen sind Gegenstand der Ansprüche 2 bis 10 und 12 bis 15.

Zur Lösung der Aufgabe sieht die Erfindung einen Einsatz für eine Spritzgießdüse einer Spritzgießvorrichtung vor, wobei die Spritzgießdüse einen Düsenkörper aufweist, der sich in einer Längsrichtung erstreckt und in dem zwischen einem ersten Ende und einem zweiten Ende entlang der Längsrichtung wenigstens ein Schmelzekanal für eine zu verarbeitende fließfähige Masse ausgebildet ist, wobei der wenigstens eine Schmelzekanal in einem im Spritzgießwerkzeug ausgebildeten Formnest der Spritzgießvorrichtung mündet. Der Einsatz hat einen Grundkörper, der sich entlang der Längsrichtung erstreckt, wobei der Grundkörper einen Abschnitt aufweist, der in montierter Stellung des Einsatzes in der Spritzgießvorrichtung im Bereich des zweiten Endes des Düsenkörpers angeordnet ist, und wobei der Grundkörper einen zweiten Abschnitt aufweist, der sich in montierter Stellung des Einsatzes in der Spritzgießvorrichtung an einer Werkzeugplatte der Spritzgießvorrichtung abstützt. Weiter ist erfindungsgemäß vorgesehen, dass der zweite Abschnitt des Grundkörpers eine Anlagefläche aufweist, wobei in der Anlagefläche wenigstens eine Ausnehmung oder Vertiefung ausgebildet ist.

Die wenigstens eine Ausnehmung oder Vertiefung in der Anlagefläche des zweiten Abschnitts des Grundkörpers sorgt dafür, dass sich die thermische Trennung zwischen Spritzgießdüse und Spritzgießwerkzeug, insbesondere zwischen Spritzgießdüse und Formnest, sehr präzise optimieren lässt, um Wärmeverluste im Angussbereich zu vermeiden. Es gelangt gezielt mehr Wärme in den Anspritzpunkt der Spritzgießdüse, so dass die zu verarbeitende fließfähige Masse bis in den Anspritzpunkt hinein stets zuverlässig fließfähig bleibt und nicht einfriert.

Der Grundkörper des Einsatzes ist dabei einfach aufgebaut und lässt sich kostengünstig realisieren. Aufgrund der in der Anlagefläche des zweiten Abschnitts des Grundkörpers eingebrachten Ausnehmungen oder Vertiefungen lässt sich mithin die Temperierung der fließfähigen Masse im Schmelzekanal mit einfachen Mitteln optimal gestalten.

Der Grundkörper des Einsatzes setzt den wenigstens einen Schmelzekanal des Düsenkörpers zumindest abschnittsweise fort, so dass die zu verarbeitende fließfähige Masse zuverlässig in das Formnest gelangt. Hierzu ist in dem Grundkörper des Einsatzes wenigstens ein Schmelzekanal ausgebildet.

Eine wichtige Ausführungsform der Erfindung sieht vor, dass der zweite Abschnitt des Grundkörpers ein Flansch ist oder flanschförmig ausgebildet ist, wobei der zweite Abschnitt des Grundkörpers einen Umfangsrand oder eine Umfangsfläche aufweist. Diese ist bevorzugt zylindrisch ausgebildet, ebenso wie der Grundkörper. Die flanschförmige Ausgestaltung gewährleistet eine gute Abstützung des Einsatzes im Werkzeug.

Die Anlagefläche des zweiten Abschnitts des Grundkörpers ist vorzugsweise senkrecht zur Längsrichtung ausgerichtet, so dass der Einsatz stets zuverlässig im Spritzgießwerkzeug abgestützt ist. Bevorzugt ist die Anlagefläche des zweiten Abschnitts des Grundkörpers dabei eine Stirnfläche, die dem Einsatz optimalen Halt bietet. Besonders bevorzugt ist die Anlagefläche des zweiten Abschnitts des Grundkörpers eine Stirnfläche des Flansches, der sich damit im Spritzgießwerkzeug gleichmäßig abstützt. Dabei kann die Anlagefläche des zweiten Abschnitts des Grundkörpers eine umlaufende Fläche sein, beispielsweise eine Ringfläche.

Um die Abstützung des Einsatzes im Spritzgießwerkzeug weiter zu optimieren, ist vorgesehen, dass die Anlagefläche des zweiten Abschnitts des Grundkörpers zumindest abschnittsweise stufenförmig ausgebildet ist. Auch dadurch lässt sich die Kontaktfläche des Einsatzes zum Werkzeug sehr genau gestalten, um einen für den jeweiligen Anwendungsfall optimale thermische Trennung zu schaffen. Beispielsweise ist die Anlagefläche des zweiten Abschnitts des Grundkörpers radial zur Längsrichtung stufenförmig ausgebildet.

Die thermische Trennung lässt sich weiter optimieren, wenn wenigstens zwei Ausnehmungen oder Vertiefungen in der Anlagefläche vorgesehen sind, wobei diese in der Anlagefläche gleichmäßig oder ungleichmäßig beabstandet sein können, was sich ebenfalls günstig auf die Optimierung des thermischen Kontakts zwischen dem Einsatz und dem Werkzeug auswirkt. Dazu kann auch beitragen, dass sich die Ausnehmungen oder Vertiefungen in der Anlagefläche senkrecht zur Längsrichtung in Radialrichtung R erstrecken oder dass die Ausnehmungen in der Anlagefläche taschen- oder segmentförmig ausgebildet sind.

Für die weitere Optimierung der thermischen Trennung von Einsatz und Spritzgießwerkzeug ist erfindungsgemäß vorgesehen, dass die Ausnehmungen oder Vertiefungen in der Anlagefläche zur Umfangsfläche des zweiten Abschnitts hin offen sind. Der Flansch hat damit seitliche Ausnehmungen oder Öffnungen, die den Wärmeübergang von dem Einsatz und damit von der Spritzgießdüse auf das Spritzgießwerkzeug im Bereich des Formnests gezielt minimieren. Zwischen den Ausnehmungen oder Vertiefungen in der Anlagefläche des Flanschs sind damit Auflagestege oder Auflagesegmente ausgebildet, die sich in Radial- und/oder Umfangsrichtung erstrecken und einen definierten Kontaktbereich bilden.

Eine weitere wichtige Ausführungsform der Erfindung sieht vor, dass der Umfangsrand oder die Umfangsfläche des zweiten Abschnitts zumindest abschnittsweise mit einem Gewinde versehen ist. Auf dieses Gewinde kann z.B. ein Werkzeug aufgeschraubt werden, um den Einsatz rasch und bequemt aus der Spritzgießdüse und damit aus dem Spritzgießwerkzeug ausbauen zu können, ohne dass die Spritzgießdüse selbst oder deren Düsenkörper aus dem Spritzgießwerkzeug entfernt werden muss. Die Handhabung des Einsatzes ist damit einfach und stets zuverlässig.

Hierbei ist es für die Handhabung des Einsatzes günstig, wenn der Außendurchmesser des ersten Abschnitts kleiner ist als der Außendurchmesser des zweiten Abschnitts, namentlich wenn der Außendurchmesser des zweiten Abschnitts in Form eines Flanschs größer ist als der Außendurchmesser des ersten Abschnitts. Der Einsatz lässt sich beim Ein- und Ausbau einfach und zuverlässig handhaben. Die Ausnehmungen oder Vertiefungen sorgen für einen möglichst geringen thermischen Kontakt zwischen Flansch und Werkzeug.

Konstruktiv ist es günstig, wenn der erste Abschnitt des Grundkörpers ein Halsabschnitt ist oder einen Halsabschnitt bildet, der in den Düsenkörper einsetzbar, an den Düsenkörper ansetzbar oder außen auf den Düsenkörper aufsetzbar ist. Auch dies wirkt sich günstig auf die Handhabbarkeit aus.

Eine weitere Ausgestaltung der Erfindung sieht vor, dass der Grundkörper einen dritten Abschnitt aufweist, der in montierter Stellung des Einsatzes in der Spritzgießvorrichtung im Bereich des Formnests der Spritzgießvorrichtung angeordnet ist. Dies verbessert weiter die Positionierung und Ausrichtung des Einsatzes im Spritzgießwerkzeug.

Der dritte Abschnitt des Grundkörpers endet vor dem Formnest des Spritzgießwerkzeugs in der Werkzeugplatte oder der dritte Anschnitt reicht bis an das Formnest heran und bildet dabei mit seiner Stirnfläche einen Teil des Formnests. Hierbei ist es von Vorteil, wenn der dritte Abschnitt des Grundkörpers an seinem Außenumfang in Längsrichtung zumindest abschnittsweise verjüngt ausgebildet ist. Auch dadurch lässt sich der Wärmeübergang von dem Einsatz auf das das Werkzeug bzw. auf das Formnest weiter optimieren.

Dazu trägt auch bei, wenn der dritte Abschnitt des Grundkörpers an seinem Außenumfang in Längsrichtung zumindest abschnittsweise stufenförmig ausgebildet ist, insbesondere wenn der Außendurchmesser des dritten Abschnitts des Grundkörpers zum Formnest (18) hin abschnittsweise und/oder stufenförmig kleiner wird. Dabei kann der dritte Abschnitt bei Bedarf in Längsrichtung zumindest abschnittsweise konisch ausgebildet sein.

Für eine kompakte Ausbildung des Einsatzes und für dessen Handhabung ist es günstig, wenn der zweite Abschnitt des Grundkörpers in Längsrichtung zwischen dem ersten Abschnitt und dem dritten Abschnitt ausgebildet ist.

Eine weitere wichtige Ausgestaltung des erfindungsgemäßen Einsatzes sieht vor, dass dieser einen Stützring aufweist oder mit einem Stützring versehen ist, wobei der Stützring mit einer ersten Stirnfläche an der Anlagefläche des zweiten Abschnitts des Grundkörpers anliegt und an einer zweiten Stirnfläche eine Anlagefläche für den Kontakt mit der Werkzeugplatte der Spritzgießvorrichtung bildet, wobei in der Anlagefläche wenigstens eine Ausnehmung oder Vertiefung ausgebildet ist. Dadurch lässt sich der thermische Kontakt zwischen dem Einsatz und dem Formnest der Spritzgießvorrichtung weiter gestalten und optimieren. Der Stütztring bildet mithin einen Isolationsring.

Der Stützring hat bevorzug einen Umfangsrand oder eine Umfangsfläche und liegt in Längsrichtung mit der ersten Stirnfläche an der Anlagefläche des zweiten Abschnitts des Grundkörpers an. Damit liegt der Stützring in eingebautem Zustand bzw. im bestimmungsgemäßen Gebrauch des Einsatzes zwischen dem zweiten Abschnitt des Grundkörpers und der Werkzeugplatte der Spritzgießvorrichtung. Folglich stützt sich der Grundkörper des Einsatzes in montierter Stellung in der Spritzgießvorrichtung über den Stützring an der Werkzeugplatte der Spritzgießvorrichtung ab.

Dabei ist es von Vorteil, wenn die zweite Stirnfläche des Stützrings eine Anlagefläche bildet, in der wenigstens eine Ausnehmung oder Vertiefung ausgebildet ist. Diese wenigstens eine Ausnehmung oder Vertiefung in der Anlagefläche des Stützrings sorgt ebenfalls dafür, dass sich die thermische Trennung zwischen Spritzgießdüse und Spritzgießwerkzeug, insbesondere zwischen Spritzgießdüse und Formnest, sehr präzise optimieren lässt, um Wärmeverluste im Angussbereich zu vermeiden.

Die Anordnung und Ausgestaltung der wenigstens einen Ausnehmung oder Vertiefung im Stützring erfolgt in gleicher Weise wie die wenigstens eine Ausnehmung oder Vertiefung im zweiten Abschnitt des Grundkörpers des Einsatzes. Auf die obigen Ausführungen dazu wird an dieser Stelle daher ausdrücklich Bezug genommen.

Konstruktiv ist es günstig, wenn der Stützring den dritten Abschnitt des Grundkörpers umschließt, wobei der Innendurchmesser des Stützrings bis auf ein definiertes Bewegungsspiel dem Außendurchmesser des dritten Abschnitts des Grundkörpers entsprechen kann. Alternativ ist vorgesehen, dass der Innendurchmesser des Stützrings größer ist als der Außendurchmesser des dritten Abschnitts des Grundkörpers. Auch dies hat Einfluss auf den Wärmeübergang, der sich durch ein erfindungsgemäßen Einsatz präzise und auf den Anwendungsfall optimiert gestalten lässt.

Eine weitere Ausführungsform sieht vor, dass der Stützring zumindest abschnittsweise mit einem Innengewinde versehen ist, wobei der Stützring mit diesem Innengewinde auf das Gewinde des zweiten Abschnitts des Grundkörpers aufgeschraubt werden kann.

Gemäß einer noch anderen Ausführungsform der Erfindung ist vorgesehen, dass die Anlagefläche des Stützrings und eine dem Formnest der Spritzgießvorrichtung zugewandte Stirnfläche des dritten Abschnitts des Grundkörpers bündig ausgebildet sind.

Um bei der Verarbeitung von abrasiven Massen eine hohe Standzeit des Einsatzes zu gewährleisten, sieht die Erfindung weiter vor, dass der Grundkörper, bezogen auf die zu verarbeitende fließfähige Masse, aus einem verschleißfesten Werkstoff besteht.

Um den Wärmeübergang weiter zu optimieren ist vorgesehen, dass der Stützring als Isolationsring aus einem schlecht wärmeleitenden Material besteht, beispielsweise Titan.

Die Aufgabe der Erfindung wird weiter gelöst durch eine Spritzgießdüse für eine Spritzgießvorrichtung, mit einem Düsenkörper, der sich in einer Längsrichtung erstreckt, mit wenigstens einem Schmelzekanal für eine zu verarbeitende fließfähige Masse, wobei sich der Schmelzekanal zumindest abschnittsweise entlang der Längsrichtung zwischen einem ersten Ende und einem zweiten Ende des Düsenkörpers erstreckt, und wobei der Schmelzekanal in einem im Spritzgießwerkzeug ausgebildeten Formnest der Spritzgießvorrichtung mündet, und mit einem zuvor geschilderten Einsatz.

Dieser Einsatz ist mit Vorteil relativ zu dem Düsenkörper längsverschieblich angeordnet oder ausgebildet, so dass thermische Dehnungen der Spritzgießdüse und des Spritzgießwerkzeugs optimal berücksichtigt werden können.

Bevorzug ist der Einsatz in den Düsenkörper eingesetzt, wobei der erste Abschnitt des Grundkörpers längsverschieblich in dem Düsenkörper angeordnet ist. In einer alternativen Ausführungsform der Erfindung ist vorgesehen, dass der Einsatz auf den Düsenkörper aufgesetzt ist, wobei der erste Abschnitt des Grundkörpers längsverschieblich auf dem Düsenkörper angeordnet ist.

Für eine optimale Temperierung der fließfähigen Masse, sieht die Erfindung vor, dass in dem Düsenkörper eine Wärmeleithülse ausgebildet ist, welche den Schmelzekanal fortsetzt, wobei die Wärmeleithülse aus einem hoch-wärmeleitfähigen Werkstoff besteht.

Hierbei ist es von Vorteil, wenn der Einsatz in die Wärmeleithülse des Düsenkörpers eingesetzt ist, wobei der erste Abschnitt des Grundkörpers längsverschieblich in der Wärmeleithülse angeordnet ist.

In einer vorteilhaften alternativen Ausführungsform kann der Einsatz längsverschieblich auf die Wärmeleithülse aufgesetzt sein, wobei der Einsatz mit dem ersten Abschnitt längsverschieblich auf der Wärmeleithülse angeordnet ist.

Eine weitere Bauform sieht vor, dass der erste Abschnitt des Grundkörpers mit einem Gewinde versehen ist, das mit der Wärmeleithülse in Eingriff steht.

Eine weitere Ausführungsform sieht vor, dass die Wärmeleithülse mittels einer Sicherungshülse im Düsenkörper fixiert ist. Diese Sicherungshülse wird beispielsweise nach dem Einsetzen der Wärmeleithülse in den Düsenkörper eingeschraubt. Der erfindungsgemäße Einsatz ist nun mit dem ersten Abschnitt zumindest abschnittsweise auf die Sicherungshülse aufgesetzt.

Hierbei kann ferner vorgesehen sein, dass der erste Abschnitt des Grundkörpers mit einem Gewinde versehen ist, das mit einem zugeordneten Abschnitt der Sicherungshülse in Eingriff steht.

Die Spritzgießdüse ist je nach Anwendung eine Heißkanaldüse oder eine Kaltkanaldüse.

Weiter ist vorgesehen, dass die Spritzgießdüse eine Nadelverschlussdüse ist oder bildet, wobei die Nadelverschlussdüse eine Verschlussnadel aufweist. In diesem Fall bildet der Einsatz vorzugsweise einen Zentrierkörper für die Verschlussnadel, wobei der Schmelzekanal in dem Grundkörper des Einsatzes zumindest abschnittsweise im Querschnitt und in Längsrichtung konisch ausgebildet sein kann.

Handelt es sich bei der Spritzgießdüse, um eine Nadelverschlussdüse, hat dies zudem den Vorteil, dass der Einsatz zusätzlich als Zentrierkörper fungiert, weil die Nadel innerhalb des Einsatzes lagestabil und präzise geführt wird. Durch die verbesserte Positionierung kann auch die Nadelführung weiter verbessert werde. Dadurch werden Beschädigungen an der Verschlussnadel aber auch Verschleißerscheinungen an der Spritzgießdüse vermindert

Weitere Merkmale, Einzelheiten und Vorteile der Erfindung ergeben sich aus dem Wortlaut der Ansprüche sowie aus der folgenden Beschreibung von Ausführungsbeispielen und den beispielhaft in den Zeichnungen dargestellten Ausführungsformen. Es zeigen
- Fig. 1: eine schematische Schrägansicht eines erfindungsgemäßen Einsatzes;
- Fig. 2: der Einsatz von Fig. 1 in einer Schnittansicht;
- Fig. 3: eine schematische Teil-Schnittansicht einer erfindungsgemäßen Spritzgießdüse mit einer anderen Ausführungsform eines erfindungsgemäßen Einsatzes;
- Fig. 4: eine andere Ausführungsform eines erfindungsgemäßen Einsatzes in einer Schnittansicht;
- Fig. 5a: eine weitere Ausführungsform eines erfindungsgemäßen Einsatzes mit Stützring in einer Schnittansicht;
- Fig. 5b: der Einsatz von Fig. 5a in einer Schrägansicht mit abgenommenem Stützring;
- Fig. 5c: eine Variante des Einsatzes von Fig. 5a und 5b;
- Fig. 6: eine weitere Ausführungsform eines erfindungsgemäßen Einsatzes in einer Schnittansicht;

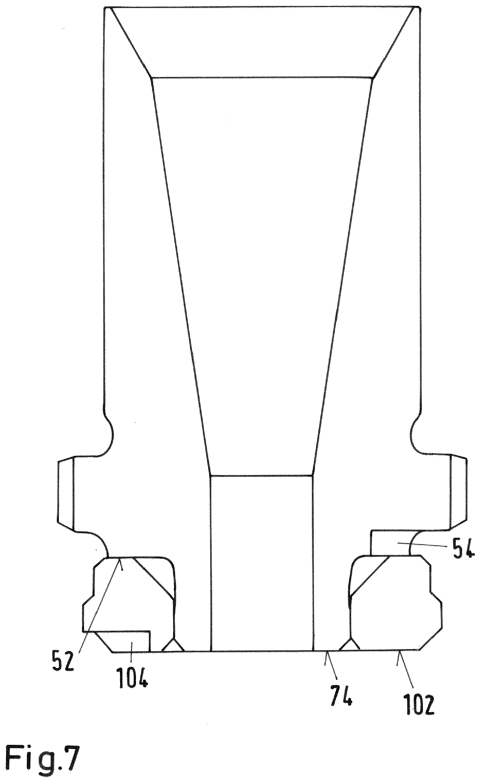

- Fig. 7: eine weitere Ausführungsform eines erfindungsgemäßen Einsatzes in einer Schnittansicht; und
- Fig. 8: eine noch andere Ausführungsform eines erfindungsgemäßen Einsatzes in einer Schnittansicht

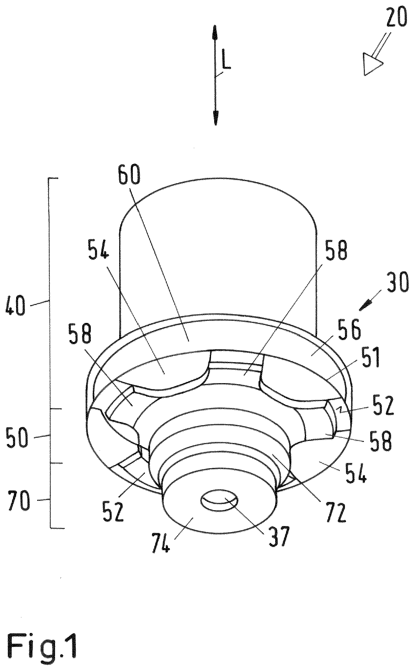

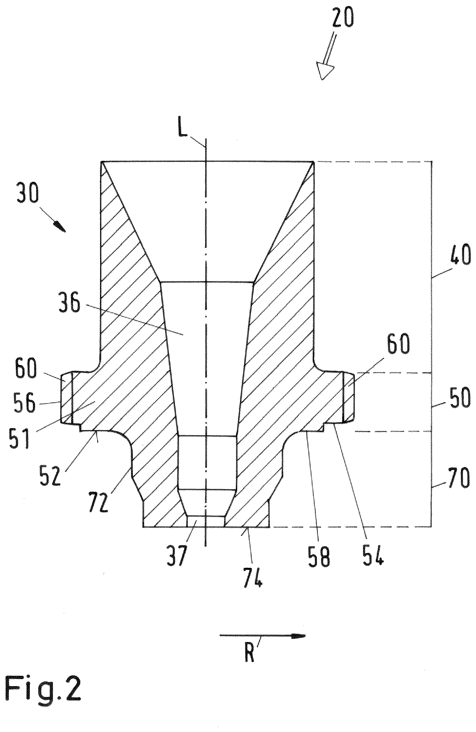

Der in Fig. 1 allgemein mit 20 bezeichnete Einsatz ist für die Verwendung in einer Spritzgießdüse 10 einer Spritzgießvorrichtung vorgesehen. Er hat einen Grundkörper 30, der sich entlang einer Längsrichtung L erstreckt und in mehrere Abschnitte 40, 50, 70 unterteilt ist. Zentrisch weist der Grundkörper 30 einen Schmelzekanal 36 auf, der abschnittsweise konisch ausgebildet ist und der in einer Auslassöffnung 37 endet (siehe dazu auch Fig. 2).

Ein erster Abschnitt 40 des Grundkörpers 30 bildet einen Halsabschnitt, der in montierter Stellung des Einsatzes 20 endseitig in einen Düsenkörper 12 der Spritzgießdüse 10 eingesetzt ist.

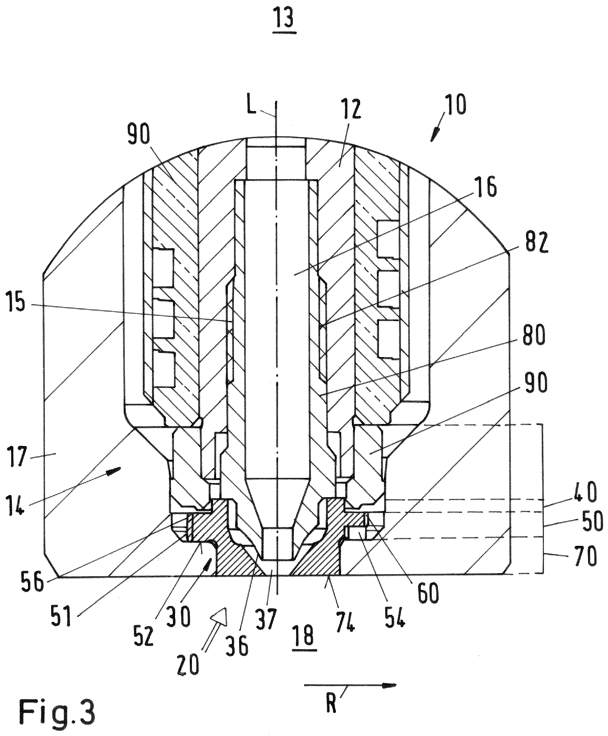

Ein zweiter Abschnitt 50 schließt unmittelbar an den ersten Abschnitt 40 an und bildet einen Flansch, der sich in montierter Stellung des Einsatzes 20 in der Spritzgießvorrichtung in Richtung Formnest 18 an einer in Fig. 3 schematisch angedeuteten Werkzeugplatte 17 der Spritzgießvorrichtung abstützt. Man erkennt in den Fig. 1 und 2 dass in diesem Ausführungsbeispiel der Außendurchmesser des ersten Abschnitts 40 kleiner ist als der Außendurchmesser des zweiten Abschnitts 50.

Der Flansch 50 hat eine zylindrische Umfangsfläche 56 sowie eine Anlagefläche 52, die senkrecht zur Längsrichtung L ausgerichtet ist und mithin eine Stirnfläche für den Flansch 50 bildet. Diese Stirnfläche 52 ist für den Kontakt mit der Werkzeugplatte 17 vorgesehen, so dass sich der Einsatz 20 in bestimmungsgemäßem Gebrauch über die Anlagefläche 52 an der Werkzeugplatte 17 der Spritzgießvorrichtung abstützen kann, während der Halsabschnitt des ersten Abschnitts 40 in den Düsenkörper 12 eintaucht.

Um den thermischen Kontakt des Einsatzes 20 zum Spritzgießwerkzeug zu verbessern, sind in der umlaufenden Anlagefläche bzw. Stirnfläche 52 des zweiten Abschnitts 50 mehrere Ausnehmungen bzw. Vertiefungen 54 ausgebildet. Diese erstrecken sich in Radialrichtung R nach außen und sind zur Umfangsfläche 56 hin offen ausgebildet. Die Vertiefungen 54 sind ferner in Umfangsrichtung gleichmäßig beabstandet, so dass dazwischen Auflagestege 58 ausgebildet sind. Durch die Ausnehmungen oder Vertiefungen 54, die auch taschenförmig oder segmentförmig ausgebildet sein können, wird die Kontaktfläche des Einsatzes 20 zur Werkzeugplatte 17 des Spritzgießwerkzeugs gezielt reduziert, was den Wärmeübergang von einer beheizten Spritzgießdüse 10 zum Spritzgießwerkzeug gezielt reduziert.

Die Stirnfläche 52 und damit deren Auflagestege 58 sind ferner in Radialrichtung R stufenförmig ausgebildet, wodurch die Kontaktfläche des Einsatzes 20 zur Werkzeugplatte 17 noch weiter reduziert wird. Dennoch bieten die Auflagestege 58 zwischen den Ausnehmungen oder Vertiefungen 54 dem Einsatz 20 eine ausreichende Stütze im Werkzeug, so dass der Einsatz sicher positioniert ist.

Um den Einsatz 20 rasch und bequem aus dem Düsenkörper 12 der Spritzgießdüse 10 herausziehen zu können, beispielsweise wenn der Einsatz 20 gewechselt und durch einen neuen ersetzt werden muss, ist die Umfangsfläche 56 des zweiten Abschnitts 50 und damit des Flanschs mit einem Gewinde 60 versehen. An diesem Gewinde 60 kann bei Bedarf ein (nicht dargestelltes) Werkzeug angesetzt werden.

Wie die Fig. 1 und 2 weiter zeigen hat der Grundkörper 30 des Einsatzes 20 einen dritten Abschnitt 70, der in montierter Stellung des Einsatzes 20 in der Spritzgießvorrichtung im Bereich des Formnests 18 der Spritzgießvorrichtung angeordnet ist. Der dritte Abschnitt 70 hat einen Außenumfang 72 sowie senkrecht zur Längsachse L eine Stirnfläche 74, die dem Formnest 18 zugewandt ist.

Vorzugsweise wird der Einsatz 20 mit dem dritten Abschnitt 70, der ebenfalls im Durchmesser keiner ist als der zweite Flanschabschnitt 50, in die Werkzeugplatte 17 eingesetzt, welche hierzu mit einer geeigneten (nicht näher bezeichneten) Ausnehmung versehen ist. Dabei kann vorgesehen sein, dass der dritte Abschnitt 70 in der Werkzeugplatte 17 endet oder diese durchragt und mit seiner Stirnfläche 74 einen Wandabschnitt des Formnests 18 bildet.

Um auch hier den Wärmeübergang von der Düse zum Werkzeug weiter zu optimieren ist vorgesehen, dass der dritte Abschnitt 70 des Einsatzes 20 in Längsrichtung L zumindest abschnittsweise stufenförmig ausgebildet ist. Dadurch lässt sich der Einsatz 20 im Spritzgießwerkzeug zudem optimal zentrieren und abdichten.

Um die Standzeit des Einsatzes 20 und damit der Spritzgießdüse 10 zu erhöhen, ist der Grundkörper 30, bezogen auf die zu verarbeitende fließfähige Masse, aus einem verschleißfesten Werkstoff gefertigt. Ferner ist der zweite Abschnitt 50 des Grundkörpers 30 in Längsrichtung L als Flansch zwischen dem ersten Abschnitt 40 und dem dritten Abschnitt 70 ausgebildet, so dass der Einsatz insgesamt äußerst kompakt ausgebildet und leicht zu handhaben ist.

Die Spritzgießdüse 10 hat, wie Fig. 3 beispielhaft zeigt, einen Düsenkörper 12, der sich in Längsrichtung L erstreckt und ein Materialrohr für die zu verarbeitende fließfähige Masse bildet. In dem Materialrohr 12 ist ein Schmelzekanal 16 vorgesehen, wobei sich der Schmelzekanal 16 zumindest abschnittsweise entlang der Längsrichtung L zwischen einem (nicht gezeigten) ersten Ende 13 und einem zweiten Ende 14 des Düsenkörpers 12 erstreckt. Der Schmelzekanal 16 mündet in einem (nicht näher dargestellten) Formnest 18 des Spritzgießwerkzeugs. Auf dem Materialrohr des Düsenkörpers 12 ist eine Heizvorrichtung 19 montiert, welche die in dem Schmelzekanal 16 geführte Masse auf eine vorgegebene Temperatur bringt und hält.

Im Bereich des zweiten Endes 14 des Düsenkörpers 12 ist eine Wärmeleithülse 80 eingesetzt, die bevorzugt aus einem hoch-wärmeleitfähigen Werkstoff besteht. Die Wärmeleithülse 80 kann längsverschieblich in den Düsenkörper 12 eingesetzt sein. Sie kann aber auch - wie Fig. 3 zeigt - in den Düsenkörper 12 eingeschraubt sein. Die Wärmeleithülse 80 ist dazu an ihrem Außenumfang mit einem Gewindeabschnitt 82 versehen, während in dem Düsenkörper 12 ein korrespondierendes Gewinde 15 ausgebildet ist.

Der Einsatz 20, wie er in den Fig. 1 und 2 dargestellt ist, wird mit seinem ersten Abschnitt 40 entweder direkt in den Düsenkörper 12 oder in die Wärmeleithülse 80 des Düsenkörpers 12 eingesetzt, wobei dieser erste Abschnitt 40 des Grundkörpers 30 längsverschieblich in der Wärmeleithülse 80 geführt ist. Dabei setzt der Grundkörper 30 des Einsatzes 20 den Schmelzekanal 16 des Düsenkörpers 12 mit seinem Kanal 36 fort.

In der Ausführungsform von Fig. 3 ist der Einsatz 20 nicht mit einem Halsabschnitt 40 in die Wärmeleithülse 80 eingesetzt. Der erste Abschnitt 40 des Grundkörpers 30 ist hier im Durchmesser größer ausgebildet und umschließt die Wärmeleithülse 80 von außen. Ergänzend wird der Einsatz 20 von einem Stützring 90 ergänzt, der den Außenumfang des Düsenkörpers 12 und damit des Materialrohrs zumindest teilweise umgreift. Der Stützring 90 bildet bevorzugt einen Isolationsring.

In einer anderen (nicht dargestellten) Ausführungsform können der Einsatz 20 und der Stützring 90 einstückig ausgebildet sein.

Die Spritgießdüse 12 kann als Heißkanaldüse oder als Kaltkanaldüse ausgebildet sein. Ferner kann die Spritgießdüse 12 als offene Düse oder als Nadelverschlussdüse gestaltet werden. In diesem Fall bildet der erfindungsgemäße Einsatz 20 einen Zentrierkörper für eine (nicht gezeigte) Verschlussnadel.

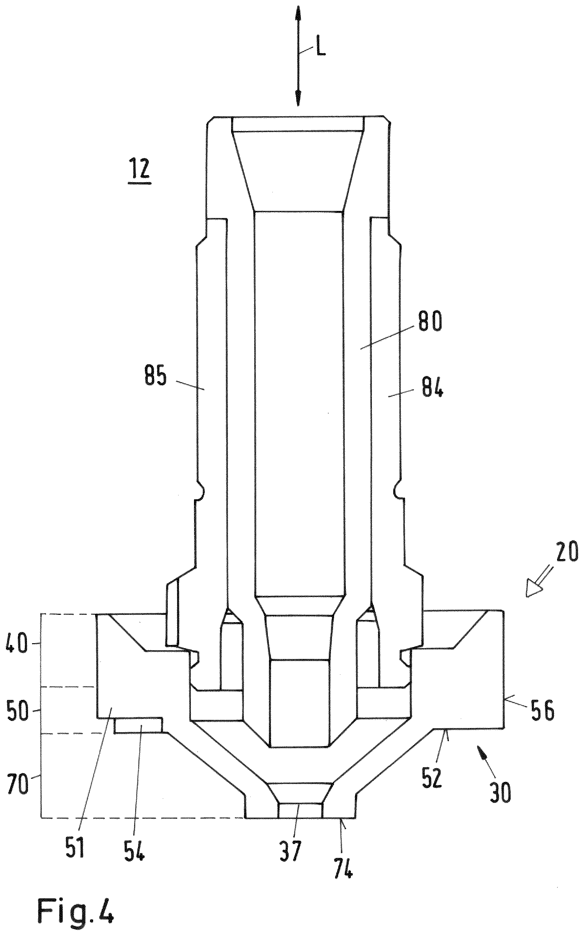

Bei der in Fig. 4 dargestellten Ausführungsform ist in dem Düsenkörper 12 der (nicht näher gezeigten) Spritzgießdüse 10 ebenfalls eine Wärmeleithülse 80 eingesetzt, die mit einer Sicherungshülse 84 im Düsenkörper 12 gesichert wird. Die Sicherungshülse 84 umschließt die Wärmehülse 80 zumindest abschnittsweise und wird mit einem Außengewinde 85 in den Düsenkörper 12 eingeschraubt, so dass die Wärmeleithülse 80 in Längsrichtung L fixiert ist. Der Düsenkörper 12 ist hierzu mit einem korrespondierenden Innengewinde versehen.

Der in Fig. 4 gleichfalls mit 20 bezeichnete Einsatz hat einen Grundkörper 30, der sich entlang einer Längsrichtung L erstreckt und in die Abschnitte 40, 50, 70 unterteilt ist. Zentrisch ist im Grundkörper 30 ein Schmelzekanal 36 ausgebildet, der abschnittsweise konisch ausgebildet ist und der in einer Auslassöffnung 37 endet (siehe dazu auch Fig. 2).

Der erste Abschnitt 40 und der zweite Abschnitt 50 des Grundkörpers 30 sind im Durchmesser größer ausgebildet als der dritte Abschnitt 70, wobei der erste Abschnitt 40 in seinem Innendurchmesser derart bemessen ist, dass der die Sicherungshülse 84 der Wärmeleithülse 80 zumindest abschnittsweise umschließt.

Der zweite Abschnitt 50 schließt auch hier unmittelbar an den ersten Abschnitt 40 an und bildet einen Flansch, der sich in montierter Stellung des Einsatzes 20 in der Spritzgießvorrichtung in Richtung Formnest 18 an der Werkzeugplatte 17 der Spritzgießvorrichtung abstützt. Der Flansch 50 hat eine im Wesentlichen zylindrische Umfangsfläche 56 sowie eine Anlagefläche 52, die senkrecht zur Längsrichtung L ausgerichtet ist und mithin eine Stirnfläche für den Flansch 50 bildet. Diese Stirnfläche 52 ist für den Kontakt mit der Werkzeugplatte 17 vorgesehen, so dass sich der Einsatz 20 in bestimmungsgemäßem Gebrauch über die Anlagefläche 52 an der Werkzeugplatte 17 der Spritzgießvorrichtung abstützen kann, während der erste Abschnitts 40 im Bereich der Sicherungshülse 84 liegt und diese zumindest abschnittsweise umschließt.

Um auch bei dieser Ausführungsform den thermischen Kontakt des Einsatzes 20 zum Spritzgießwerkzeug zu verringern, sind in der umlaufenden Anlagefläche bzw. Stirnfläche 52 des zweiten Abschnitts 50 mehrere Ausnehmungen bzw. Vertiefungen 54 ausgebildet. Diese können sich - wie in den vorherigen Ausführungsbeispielen - in Radialrichtung R nach außen erstrecken, wobei auch hier die Ausnehmungen bzw. Vertiefungen 54 zur Umfangsfläche 56 hin offen ausgebildet sind. Die Vertiefungen 54 können in Umfangsrichtung gleichmäßig oder ungleichmäßig beabstandet sein, so dass Auflagestege 58 ausgebildet sind, die auch hier bei Bedarf stufenförmig sein können, um die Anlagefläche des Einsatzes präzise definieren zu können. Die Ausnehmungen oder Vertiefungen 54 selbst sind bevorzugt diskret ausgebildet, vorzugsweise taschenförmig oder segmentförmig.

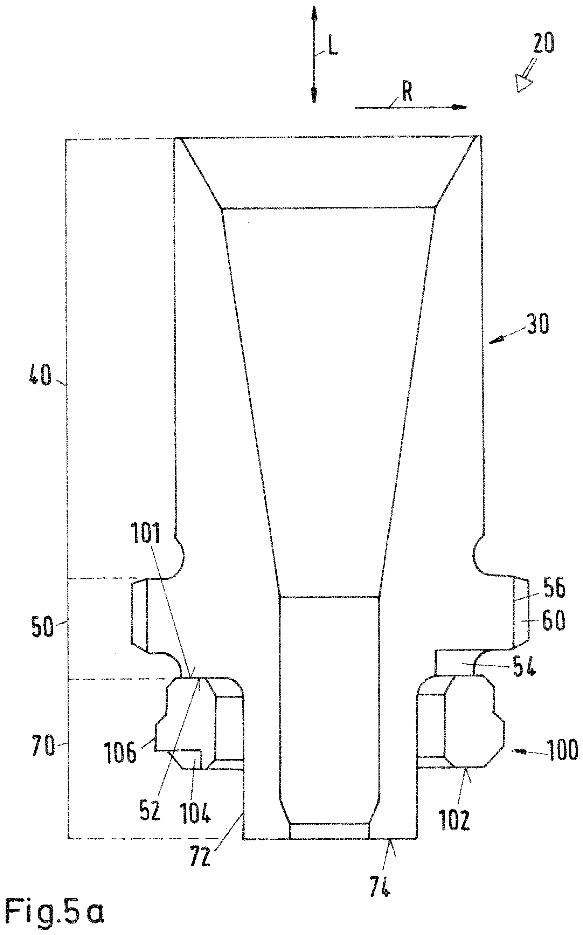

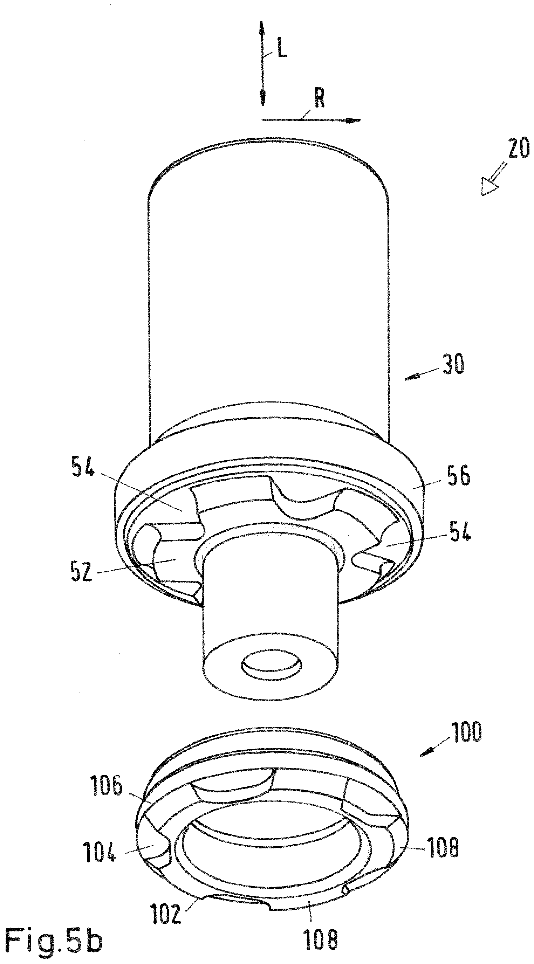

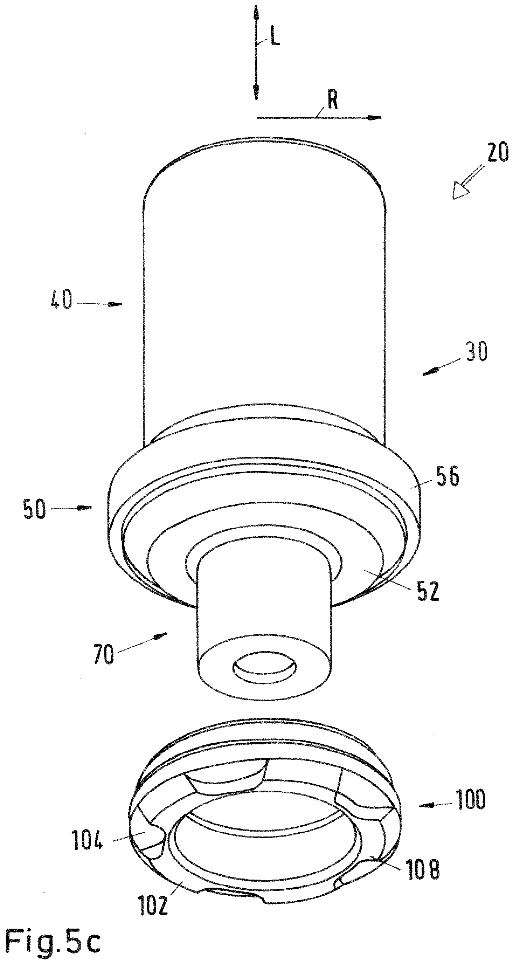

Die Fig. 5a und 5b zeigen eine weitere Ausführungsform eines erfindungsgemäßen Einsatzes 20. Dieser entspricht in seiner Grundform zunächst der Ausführungsform der Fig. 1 und 2, d.h. der Einsatz 20 hat einen Grundkörper 30 mit mehreren Abschnitten 40, 50, 70, wobei der mittlere Abschnitt 50 einen Flansch bildet, der in Richtung Formnest 18 eine Anlage- und Stirnfläche 52 aufweist.

In der Anlagefläche bzw. Stirnfläche 52 des zweiten Abschnitts 50 sind mehrere Ausnehmungen bzw. Vertiefungen 54 ausgebildet, die sich bevorzugt in Radialrichtung R nach außen erstrecken. Die Ausnehmungen bzw. Vertiefungen 54 sind taschen- oder muldenförmig gestaltet und auch hier zur Umfangsfläche 56 des Flanschs 50 hin offen ausgebildet, um die thermische Kontaktfläche des Einsatzes 20 zur Werkzeugplatte 17 des Spritzgießwerkzeugs gezielt zu definieren.

Unterhalb des zweiten Abschnitts 50 des Einsatzes 20 ist auf der Höhe des dritten Abschnitts 70 ein Stützring 100 angeordnet. Dieser hat einen Umfangsrand bzw. eine Umfangsfläche 106 sowie einen (nicht bezeichneten) Innendurchmesser, der größer ist als der Außendurchmesser des Außenumfangs 72 des dritten Abschnitts 70. Der Stützring bzw. Isolationsring 100 hat ferner senkrecht zur Längsachse L eine erste Stirnfläche 101, die in Richtung des ersten Abschnitts 40 des Einsatzes 20 ausgerichtet ist, sowie eine gegenüberliegende zweite Stirnfläche 102, mit der sich der Stützring 100 in montierter Stellung des Einsatzes 20 an der Werkzeugplatte 17 der Spritzgießvorrichtung abstützt.

Man erkennt, dass sich der Einsatz 20 in bestimmungsgemäßem Gebrauch über den Stützring 100 und dessen Anlagefläche 102 an der Werkzeugplatte 17 der Spritzgießvorrichtung abstützt, während der Halsabschnitt des ersten Abschnitts 40 auf der gegenüberliegenden Seite im Düsenkörper 12 sitzt und darin längsverschieblich gelagert ist.

Um den thermischen Kontakt des Stützrings 100 und damit auch des Einsatzes 20 zum Spritzgießwerkzeug genau einstellen zu können, sind in der umlaufenden Anlagefläche bzw. Stirnfläche 102 des Stützrings 100 mehrere Ausnehmungen bzw. Vertiefungen 104 ausgebildet. Diese erstrecken sich in Radialrichtung R nach außen und sind zur Umfangsfläche 106 hin offen ausgebildet. Die Vertiefungen 104 können auch hier in Umfangsrichtung gleichmäßig beabstandet sein, so dass dazwischen Auflagestege 108 ausgebildet sind. Durch die Ausnehmungen oder Vertiefungen 104, die auch taschenförmig oder segmentförmig ausgebildet sein können, lässt sich die Kontaktfläche Stützrings 100 und damit der Kontakt des Einsatzes 20 zur Werkzeugplatte 17 des Spritzgießwerkzeugs genauestens definieren, was den Wärmeübergang von einer beheizten Spritzgießdüse 10 zum Spritzgießwerkzeug gezielt reduziert.

Die Stirnfläche 102 und deren Auflagestege 108 können in Radialrichtung R stufenförmig oder, wie in Fig. 5b gezeigt, schräg ausgebildet sein, wodurch sich die Kontaktfläche zur Werkzeugplatte 17 noch genauer definieren lässt.

Die Bauform des Einsatzes 20 der Fig. 5b entspricht im Wesentlichen der Bauform der Fig. 5a und 5b. Die Anlagefläche bzw. Stirnfläche 52 des zweiten Abschnitts 50 des Grundkörpers 30 ist hier jedoch nicht mit mehrere Ausnehmungen bzw. Vertiefungen 54 versehen. Der zweite Abschnitt 50 des Grundkörpers liegt mit seiner gesamten Anlagefläche 52 auf der ersten Stirnfläche 101 des Stützrings 100 auf.

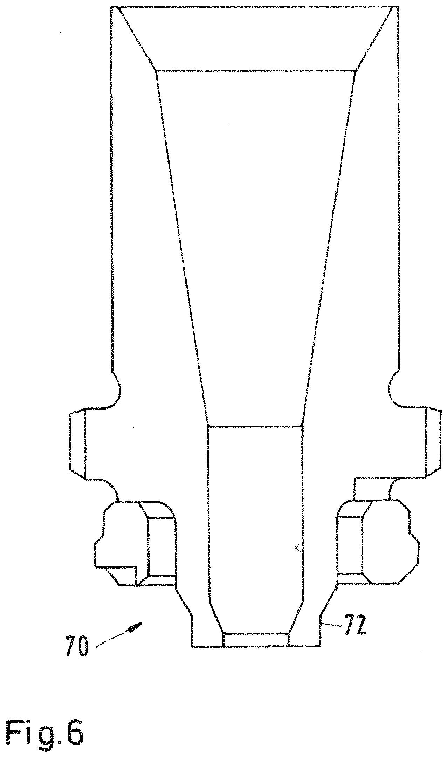

Fig. 6 zeigt eine alternative Ausgestaltung des dritten Abschnitts 70 des Grundkörpers 30.

Während der dritte Abschnitt 70 in der Ausführungsform der Fig. 5a bis 5c insgesamt zylindrisch ist und entlang der Längsachse L einen gleichbleibenden Außendurchmesser aufweist, ist der dritte Abschnitt 70 des Grundkörpers 30 in der Fig. 6 an seinem Außenumfang 72 in Längsrichtung L zumindest abschnittsweise verjüngt ausgebildet, um den Wärmeübergang von dem Einsatz 20 auf das das Werkzeug bzw. auf das Formnest weiter zu optimieren.

In der Ausführungsform eines erfindungsgemäßen Einsatzes 20 mit einem Stützring 100 ist vorgesehen, dass der dritte Abschnitt 70 mit seiner Stirnfläche 74 auf gleicher Höhe endet wie die zweite Stirnfläche bzw. Anlagefläche 102 des Stützrings. Beide Flächen liegen damit bündig in einer Ebene.

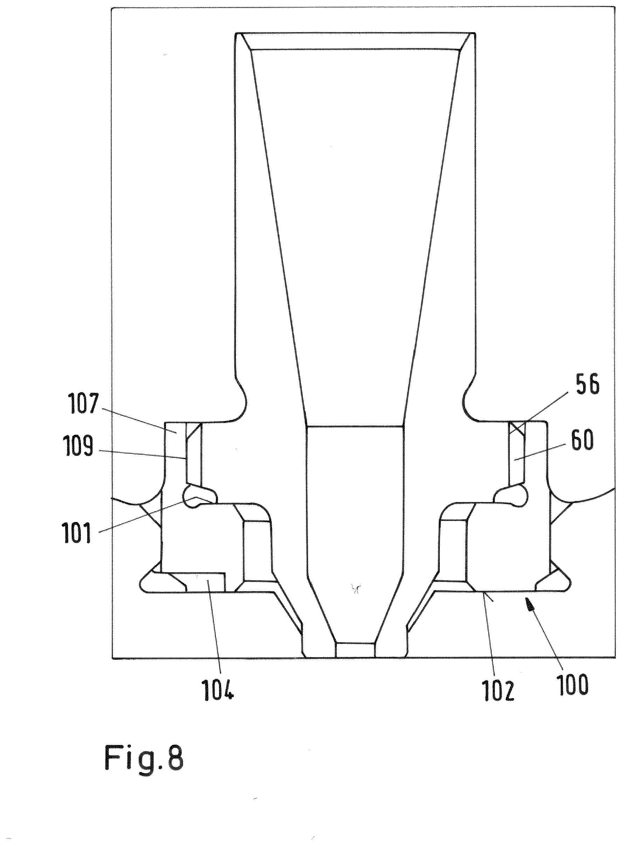

Eine noch andere Ausgestaltung der Erfindung zeigt Fig. 8. Hier ist der Stützring 100 fest mit dem Grundkörper 30 verbunden.

Beispielsweise trägt der Stützring 100 hierfür über der ersten Stirnfläche 101 einen Rand 107, der an seinem Innenumfang mit einem Gewinde 109 versehen ist. Mit diesem Gewinde 109 kann der Stützring 100 auf das Gewinde 60 am Umfangsrand bzw. an der Umfangsfläche 56 des zweiten Abschnitts 50 aufgeschraubt werden. Denkbar ist auch die Ausbildung einer anderen Verbindung, z.B. eine Bajonettverbindung oder eine Rastverbindung.

In einer noch anderen Ausführungsform der Erfindung wird der Einsatz 20 mit seinem ersten Abschnitt 40 nicht als Halsabschnitt in den Düsenkörper 12 der Spritzgießdüse 10 eingesetzt. Der erste Abschnit ist vielmehr derart ausgebildet, dass dieser entweder zumindest abschnittsweise auf den Düsenkörper 12 oder - wie in Fig. 4 gezeigt - auf die Wärmeleithülse 80 oder deren Fixierelement 84 aufgesetzt wird. In diesem Fall kann es weiter zweckmäßig sein, wenn der Außendurchmesser des ersten Abschnitts 40 größer ist als der Außendurchmesser des zweiten Abschnitts 50.

Man erkennt, dass die erfindungsgemäße Lösung einen Einsatz 20 für eine Spritzgießdüse 10 einer Spritzgießvorrichtung vorschlägt, wobei die Spritzgießdüse 10 einen Düsenkörper 12 aufweist, der sich in einer Längsrichtung L erstreckt und in dem zwischen einem ersten Ende 13 und einem zweiten Ende 14 entlang der Längsrichtung L wenigstens ein Schmelzekanal 16 für eine zu verarbeitende fließfähige Masse ausgebildet ist, wobei der wenigstens eine Schmelzekanal 16 in einem im Spritzgießwerkzeug ausgebildeten Formnest 18 der Spritzgießvorrichtung mündet, der Einsatz 20 hat einen Grundkörper 30, der sich entlang der Längsrichtung L erstreckt. Der Grundkörper 30 des Einsatzes 20 hat einen Abschnitt 40, der in montierter Stellung des Einsatzes 20 in der Spritzgießvorrichtung im Bereich des zweiten Endes 14 des Düsenkörpers 12 angeordnet ist, und einen zweiten Abschnitt 50, der sich in montierter Stellung des Einsatzes 20 in der Spritzgießvorrichtung an einer Werkzeugplatte 17 der Spritzgießvorrichtung abstützt. Um neben einem guten Verschleißschutz für die Spritzgießdüse eine optimierte Temperierung der in der Spritzgießdüse geführten fließfähigen Masse zu ermöglichen, sieht die Erfindung vor, dass der zweite Abschnitt 50 des Grundkörpers 30 für den Kontakt mit der Werkzeugplatte 17 der Spritzgießvorrichtung eine Anlagefläche 52 aufweist, wobei in der Anlagefläche 52 wenigstens eine Ausnehmung oder Vertiefung 54 ausgebildet ist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| L | Längsrichtung | 54 | Ausnehmung oder Vertiefung |
| R | Radialrichtung | 56 | Umfangsrand/Umfangsfläche |
| 10 | Spritzgießdüse | 58 | Auflagesteg |
| 12 | Düsenkörper | 60 | Gewinde |
| 13 | erstes Ende | 70 | dritter Abschnitt |
| 14 | zweites Ende | 72 | Außenumfang |
| 15 | Gewinde | 74 | Stirnfläche |
| 16 | Schmelzekanal | 80 | Wärmeleithülse |
| 17 | Formnestplatte | 82 | Gewindeabschnitt |
| 18 | Formnest | 84 | Sicherungshülse |
| 19 | Heizvorrichtung | 85 | Außengewinde |
| 20 | Einsatz | 90 | Stützring/Isolationsring |
| 30 | Grundkörper | 100 | Stützring/Isolationsring |
| 36 | Schmelzekanal | 101 | erste Stirnfläche |
| 37 | Auslassöffnung | 102 | zweite Stirnfläche / Anlagefläche |
| 40 | erster Abschnitt | 104 | Ausnehmung oder Vertiefung |
| 50 | zweiter Abschnitt | 106 | Umfangsrand/Umfangsfläche |
| 51 | Flansch | 108 | Auflagesteg |
| 52 | Anlagefläche | | |

## Patentansprüche

1. Einsatz (20 für eine Spritzgießdüse (10) einer Spritzgießvorrichtung, wobei die Spritzgießdüse (10) einen Düsenkörper (12) aufweist, der sich in einer Längsrichtung (L) erstreckt und in dem zwischen einem ersten Ende (13 und einem zweiten Ende (14) entlang der Längsrichtung (L) wenigstens ein Schmelzekanal (16) für eine zu verarbeitende fließfähige Masse ausgebildet ist, wobei der wenigstens eine Schmelzekanal (16) in einem im Spritzgießwerkzeug ausgebildeten Formnest (18) der Spritzgießvorrichtung mündet,
▪ mit einem Grundkörper (30), der sich entlang der Längsrichtung (L) erstreckt,
▪ wobei der Grundkörper (30) einen Abschnitt (40) aufweist, der in montierter Stellung des Einsatzes (20) in der Spritzgießvorrichtung im Bereich des zweiten Endes (14) des Düsenkörpers (12) angeordnet ist, und
▪ wobei der Grundkörper (30) einen zweiten Abschnitt (50) aufweist, der sich in montierter Stellung des Einsatzes (20) in der Spritzgießvorrichtung an einer Werkzeugplatte (17) der Spritzgießvorrichtung abstützt,
**dadurch gekennzeichnet, dass** der zweite Abschnitt (50) des Grundkörpers (30) für den Kontakt mit der Werkzeugplatte (17) der Spritzgießvorrichtung eine Anlagefläche (52) aufweist, wobei in der Anlagefläche (52) wenigstens eine Ausnehmung oder Vertiefung (54) ausgebildet ist.

2. Einsatz nach Anspruch 1, **dadurch gekennzeichnet, dass** der zweite Abschnitt (50) des Grundkörpers (30) ein Flansch (51) ist oder flanschförmig ausgebildet ist, wobei der zweite Abschnitt (50) des Grundkörpers (30) einen Umfangsrand oder eine Umfangsfläche (56) aufweist.

3. Einsatz nach Anspruch 1 oder 2, **dadurch gekennzeichnet, dass** die Anlagefläche (52) des zweiten Abschnitts (50) des Grundkörpers (30) zumindest abschnittsweise stufenförmig ausgebildet ist.

4. Einsatz nach einem der Ansprüche 1 bis 3, **dadurch gekennzeichnet, dass** wenigstens zwei Ausnehmungen oder Vertiefungen (54) in der Anlagefläche (52) vorgesehen sind, wobei die Ausnehmungen oder Vertiefungen (54) taschenförmig oder segmentförmig ausgebildet sind und/oder sich in der Anlagefläche (52) senkrecht zur Längsrichtung (L) in Radialrichtung (R) erstrecken.

5. Einsatz nach einem der Ansprüche 1 bis 4, **dadurch gekennzeichnet, dass** die Ausnehmungen oder Vertiefungen (54) in der Anlagefläche (52) zur Umfangsfläche (56) des zweiten Abschnitts (50) hin offen sind.

6. Einsatz nach einem der Ansprüche 1 bis 5, **dadurch gekennzeichnet, dass** der Umfangsrand oder die Umfangsfläche (56) des zweiten Abschnitts (50) zumindest abschnittsweise mit einem Gewinde (60) versehen ist.

7. Einsatz nach einem der Ansprüche 1 bis 6, **dadurch gekennzeichnet, dass** der Grundkörper (30) einen dritten Abschnitt (70) aufweist, der in montierter Stellung des Einsatzes (20) in der Spritzgießvorrichtung im Bereich des Formnests (18) der Spritzgießvorrichtung angeordnet ist.

8. Einsatz nach einem der Ansprüche 1 bis 7, **dadurch gekennzeichnet, dass** der dritte Abschnitt (70) des Grundkörpers (30) an seinem Außenumfang (72) in Längsrichtung (L) zumindest abschnittsweise verjüngt ausgebildet ist.

9. Einsatz nach einem der Ansprüche 1 bis 8, **dadurch gekennzeichnet, dass** der Einsatz (20) einen Stützring (100) aufweist oder mit einem Stützring (100) versehen ist, wobei der Stützring (100) mit einer ersten Stirnfläche (101) an der Anlagefläche (52) des zweiten Abschnitts (50) des Grundkörpers (30) anliegt und an einer zweiten Stirnfläche (102) eine Anlagefläche für den Kontakt mit der Werkzeugplatte (17) der Spritzgießvorrichtung bildet, wobei in der Anlagefläche (102) wenigstens eine Ausnehmung oder Vertiefung (104) ausgebildet ist.

10. Einsatz nach Anspruch 9, **dadurch gekennzeichnet, dass** die Anlagefläche (102) des Stützrings (100) gemäß einem der Ansprüche 3 bis 5 ausgebildet ist.

11. Spritzgießdüse (10) für eine Spritzgießvorrichtung,
▪ mit einem Düsenkörper (12), der sich in einer Längsrichtung (L) erstreckt,
▪ mit wenigstens einem Schmelzekanal (16) für eine zu verarbeitende fließfähige Masse, wobei sich der Schmelzekanal (16) zumindest abschnittsweise entlang der Längsrichtung (L) zwischen einem ersten Ende (13) und einem zweiten Ende (14) des Düsenkörpers (12) erstreckt, und wobei der Schmelzekanal (16) in einem im Spritzgießwerkzeug ausgebildeten Formnest (18) der Spritzgießvorrichtung mündet, und
▪ mit einem Einsatz (20) gemäß einem der Ansprüche 1 bis 10.

12. Einsatz nach Anspruch 11, **dadurch gekennzeichnet, dass** der Einsatz (20) relativ zu dem Düsenkörper (12) längsverschieblich angeordnet oder ausgebildet ist.

13. Einsatz nach Anspruch 11 oder 12, **dadurch gekennzeichnet, dass** in dem Düsenkörper (12) eine Wärmeleithülse (80) ausgebildet ist, welche den Schmelzekanal (16) fortsetzt.

14. Einsatz nach einem der Ansprüche 11 bis 13, **dadurch gekennzeichnet, dass** der Einsatz (20) in die Wärmeleithülse (80) des Düsenkörpers (12) eingesetzt ist, wobei der erste Abschnitt (40) des Grundkörpers (30) längsverschieblich in der Wärmeleithülse (80) angeordnet ist.

15. Einsatz nach einem der Ansprüche 11 bis 13, **dadurch gekennzeichnet, dass** der Einsatz (20) auf der Wärmeleithülse (80) des Düsenkörpers (12) und/oder auf einer die Wärmeleithülse (80) im Düsenkörper (12) fixierende Sicherungshülse (84) aufgesetzt ist, wobei der erste Abschnitt (40) des Grundkörpers (30) längsverschieblich auf der Wärmeleithülse (80) oder der Sicherungshülse (84) angeordnet ist.
